Europäisches Patentamt

**European Patent Office**

Office européen des brevets

(11) Publication number:

**0 143 581**
**A2**

# EUROPEAN PATENT APPLICATION

(21) Application number: **84307900.5**

(22) Date of filing: **14.11.84**

(51) Int. Cl.⁴: **G 06 K 11/06**

(30) Priority: **25.11.83 GB 8331590**

(43) Date of publication of application: **05.06.85**
**Bulletin 85/23**

(84) Designated Contracting States: **AT BE CH DE FR GB IT LI LU NL SE**

(71) Applicant: **Poynder, Colin Leslie, 25 Station Road, Epping Essex CM16 4HH (GB)**

(72) Inventor: **Poynder, Colin Leslie, 25 Station Road, Epping Essex CM16 4HH (GB)**

(74) Representative: **Billington, Lawrence Emlyn et al, HASELTINE LAKE & CO Hazlitt House 28 Southampton Buildings Chancery Lane, London WC2A 1AT (GB)**

(54) **A linear measurement apparatus.**

(57) A linear measurement apparatus is in the form of a highly portable and manipulable hand-held pen which can be linked by an interface to a computer running a spreadsheet program. The pen comprises a sensing tip in the form of a ball (4), at one end of a rotary shaft (5), running along the axis of the pen. The shaft (5) may be driven in rotation, its rotation being detected by a sensor (11, 12, 13) which can provide a count indicative of the amount of rotation of the ball (4) and thus of the length of a line the ball (4) traverses. The line length can be entered in the spreadsheet.

-1-

## A LINEAR MEASUREMENT APPARATUS

This invention relates to a linear measurement apparatus.

There are in existence many complex, expensive and highly accurate computer peripheral devices which can input to a computer information about a graphic display on a visual display unit, or information about a drawing. As an example of the first category of device, the light pen is well known. Such a device is, however, restricted in use since it must be used in conjunction with a visual display unit or other specially adapted display means.

Also well known is the so-called graphics tablet, which is an apparatus defining a fixed area cooperable with a probe to input to a computer information concerning a diagram etc on the tablet. Again, the device is restricted to diagrams actually on the area of the tablet and is thus of limited use in wider environments.

There is a long felt want, by those using computers in the course of their businesses, for a cheap and simple device which can be used to enable a computer to receive linear measurements directly off a blueprint, map or drawing, or even off a three-dimensional object such as a building. In the past, in order to transfer such linear measurements to a computer one has had to use a ruler or tape measure and then key-in to the computer, via its keyboard, the measurements so obtained.

According to the present invention there is provided a linear measurement apparatus in the form of a computer peripheral comprising a holder which can be freely manipulated by a human hand as desired, a rotary element which is supported by the holder and which is to rotate on and along a line to be measured, rotation detection means to detect rotation of said rotary element, and electrical connection means coupled to said rotation detection means for delivering therefrom electrical signals indicative of the amount of rotation of said rotary element and thus of the length of said line to be measured.

A preferred embodiment of the invention may provide a linear measurement apparatus in the form of a computer peripheral which is not restricted to a predefined area, such as is a light-pen or a graphics tablet.

A preferred embodiment of the invention may provide a linear measurement apparatus which can feed information to a computer or storage means simultaneously with its being used to measure a line.

A preferred embodiment of the invention may provide a linear measurement apparatus which can be freely manipulated by a human hand to measure lines on a two-dimensional object or on a three dimensional object of any shape.

A preferred embodiment of the invention may provide a linear measurement apparatus which is cheap, simple and rapid in use and, while not being highly accurate, is nevertheless sufficiently accurate for the purpose of making estimations from drawings, commensurate with the accuracy requirements of such an application, as will be appreciated by a man skilled in the art of estimation.

In one embodiment the holder can take the form substantially of a pen body, with the rotary element taking the form of a ball at one end of the pen body. This provides a particularly convenient form of the device, which is particularly freely manipulable as aforesaid.

For a better understanding of the invention and to show how it may be put into effect reference will now be made, by way of example, to the accompanying drawings in

-3-

which:

Figure 1 shows a pen according to the present invention;

Figure 2 shows internal details of the pen of Figure 1;

Figure 3 shows a modification of the pen of Figure 1;

Figure 4 shows another modification of the pen of Figure 1;

Figure 5 shows an interface unit for use with a pen according to Figures 1 and 2;

Figure 6 shows a computer system comprising a pen according to Figures 1 and 2, an interface according to Figure 5, with a pipework diagram being shown also;

Figure 7 is a schematic diagram of a pen plus interface; and

Figure 8 shows the display of a spreadsheet program.

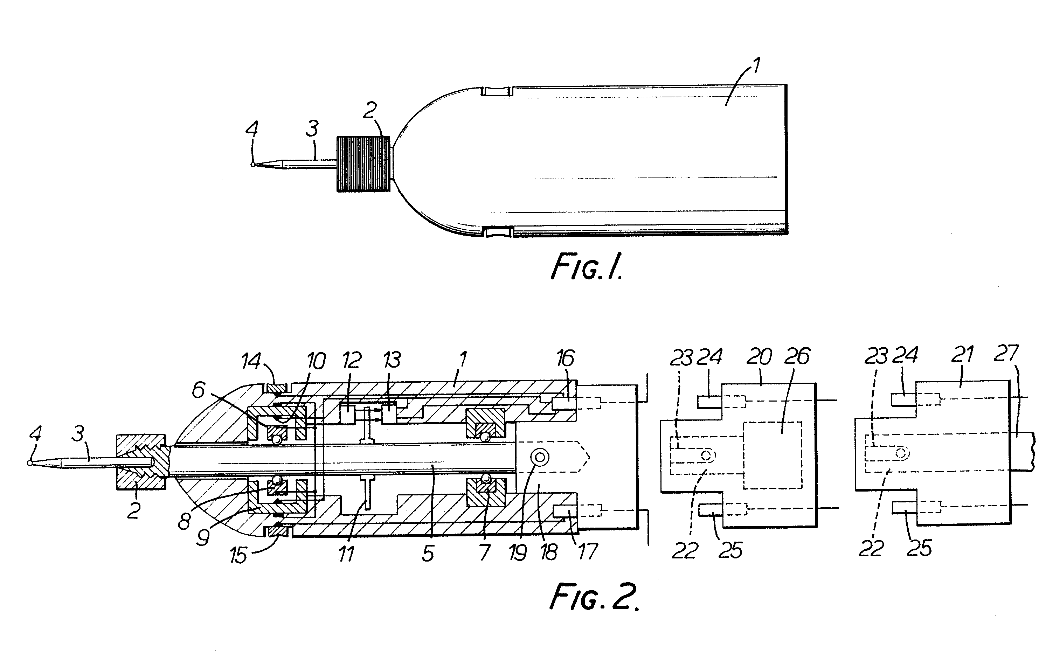

Figure 1 shows the external configuration of a pen of a linear measurement apparatus according to the present invention. The pen comprises a holder 1 which can be conveniently held in a human hand in the manner of a conventional pen, so as to be freely manipulable as desired. A small chuck or collet 2 is rotatable with respect to the holder 1 and grasps securely a replaceable stylus or nib 3. At the tip of the nib 3, and integral with it, is a serrated or roughened ball 4.

When the pen is in use the collet 2, nib 3 and ball 4 are driven in rotation by an electric motor, in a manner to be described in more detail hereinafter. The user of the pen allows the rotation of the ball 4 to draw it on and along a line to be measured, say on a map, blueprint or three-dimensional object. The amount of rotation of the ball 4 is detected by means described hereinafter, and this provides an accurate measure of the length of the line along which the ball 4 travels.

It is to be noted that the instrument illustrated in Figure 1 is extremely versatile and portable, and because of its convenient shape and construction can be used in many awkward situations. For example, it could be used easily on walls and ceilings, and because of the small diameter of the ball 4 it can be used to measure accurately fine lines which have sharp bends and angles in them, and can be used to measure such lines on very small solid objects also. Another such awkward situation is where one wishes to retrieve measurements from a drawing in a book, magazine or file.

Figure 2 shows the internal constructional details of the pen of Figure 1.

The collet 2, nib 3 and ball 4 are secured to one end of a shaft 5 extending along the axis of the pen. The shaft 5 is rotatably supported in the holder 1 by means of two ball-race bearings, a front bearing 6 and a rear bearing 7.

The rear bearing 7 is rigid in a radial sense and the shaft 5 cannot move bodily radially in the bearing 7, but it can pivot slightly about the bearing 7.

The front bearing 6 on the other hand allows a very slight radial bodily movement of the shaft 5, since it comprises an inner bearing ring 8 which floats within a fixed outer bearing ring 9.

An annular pressure switch 10 extends within the gap between the inner and outer bearing rings 8 and 9.

An electro-optic sensor is provided to detect and signal rotation of the shaft 5, and comprises a radially slotted disc 11 fixed to the shaft 5, a light source 12 at one axial side of the disc 11, and a light-operated switch 13, in the form of a photo-electric sensor, at the opposite axial side of the disc 11. Alternatively, the sensor could be a magnetic device.

Two finger-operated switches 14 and 15 are provided at opposite sides of the pen near the front end thereof. Switch 14 is an ENTER switch and switch 15 is a CURSOR CONTROL switch, as will be described in more detail hereinafter.

Electrical connections from the annular pressure switch 10, the light-operated switch 13, and the finger-operated switches 14 and 15 run to terminals 16 and 17 in a cable plug 18 received by the rear end of the pen. In Figure 2 these electrical connections are shown diagrammatically only for the sake of clarity. Their actual arrangement will be clearly apparent to a man skilled in the art.

The shaft 5 has near its rear end two diametrically-opposed radially extending drive pins, only one 19 of which is visible.

For driving the shaft 5 in rotation, one of two motor-driven drive plugs 20 and 21 can be inserted instead of the cable plug 18, as desired. Each plug 20 and 21 contains a motor driven socket 22 formed with two diametrically opposed axially extending slots, only one slot 23 of which is visible in each case. When the drive plug 20 or 21 is inserted into the pen, the end of the shaft 5 enters into the socket 22 and the pins 19 are received in the slots 23. The drive socket 22 is thus put into driving connection with the shaft 5. In addition, the terminals 24 and 25 in the drive plug 20 or 21 allow the drive plug itself to provide for an external electrical connection to the pen.

The drive plug 20 contains a small D.C. motor 26 for driving the shaft 5 via the socket 22, and in the drive plug 21 the socket 22 is coupled to one end of a flexible drive shaft 27, only an end portion of which is shown for the sake of clarity.

When the pen shown in Figure 2 is put into operation, one of the drive plugs 20 and 21 is inserted into the end of the pen. In order to start and stop the electrical drive, lateral pressure applied to the ball 4 when put onto a line to be measured automatically energises the drive motor by means of actuation of the annular pressure switch 10. Also, the annular pressure switch 10 delivers a sensing signal to indicate that the ball 4 has been applied to or removed from a line to be measured. The operator holds the pen with the ball 4 on the line, which rotates and draws the pen along the line.

It will be understood that many variations could be employed in the pen shown in Figures 1 and 2. Thus, for example, the small 1mm diameter ball 4 is used so that one can trace accurately along, say, a fine line on a drawing or small three-dimensional object. The ball 4 is driven in rotation by a motor because it is not possible to make such a small ball rotate the relatively large shaft 5 simply by friction between the ball 4 and the drawing. There are, however, applications in which a larger ball 4 could be used which could rotate the shaft 5 by itself. In practice, therefore, the cable plug 18 would not be used with the 1mm ball 4, but only with balls which would not require a motor drive. The plug 18 is shown inserted in Figure 2, simply by way of explanation.

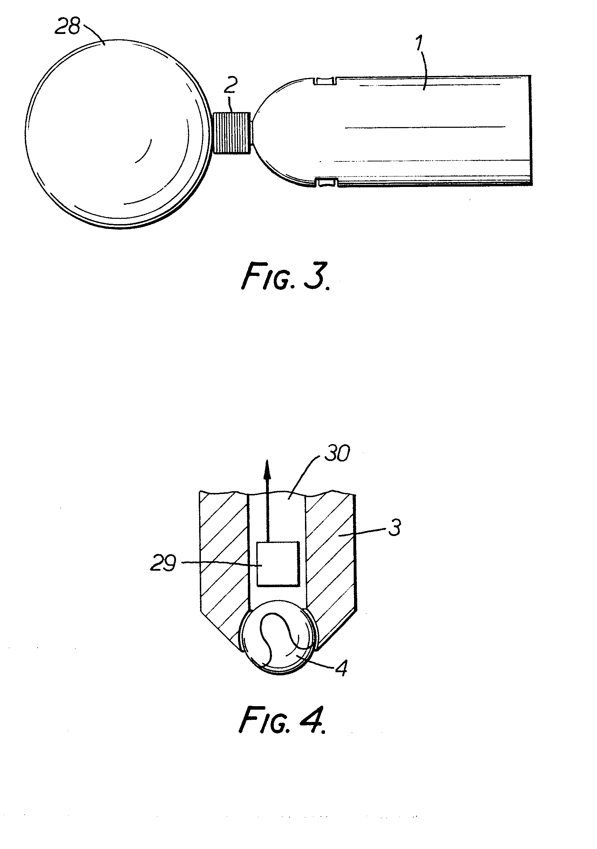

Figure 3 shows a variation of the pen in which the nib 3 of Figures 1 and 2 is replaced in the collet 4 by another nib carrying a much larger ball 28. Such a ball could be used by someone measuring, say, large three dimensional objects such as buildings. For example, an electrician may want to measure the length of an electrical wiring path, or a plumber might want to measure the length of a pipework path. Clearly, rotation of the large ball 28 could drive the shaft 5 with ease, thus avoiding the necessity for any separate driving of the shaft 5.

A further variation would be to provide means for enabling the ball 4 to mark the drawing, only if required. Thus, an optional addition to the nib would be means for the application of an ink to the ball as it rotates, or the release of an ink pressure-fed through a porous ball, or a fine aerosol jet released by the pressure transducer, so that the path of the ball would be marked. The ink could be an invisible ink made visible under, for example, ultra-violet illumination.

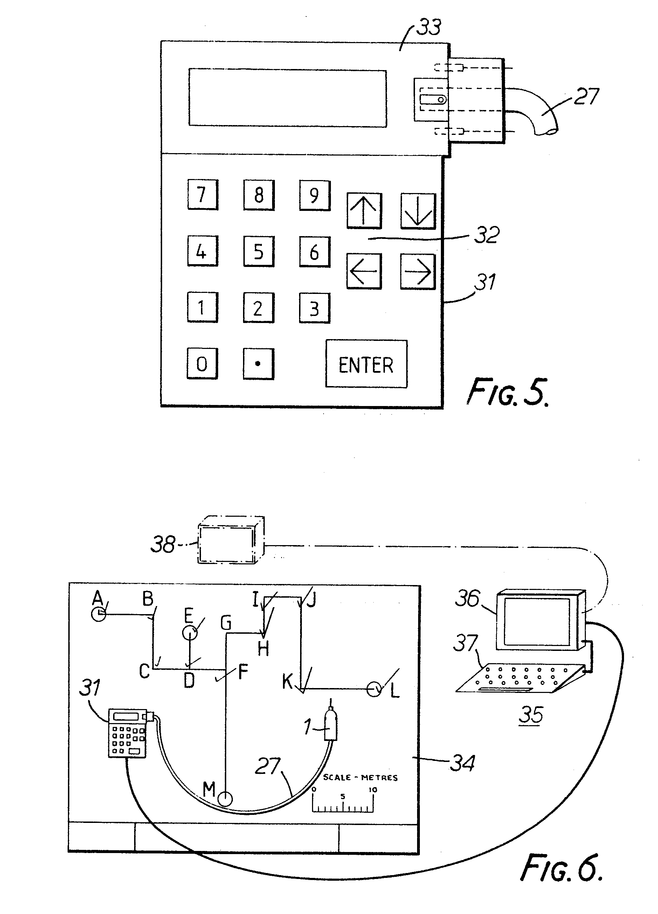

Figure 4 shows a variation of the nib 3 which is similar to a ball-point pen. The end of the nib 3 is adapted to contain a ball 4 which is an optically or magnetically encoded sphere. It could, for example have a line on it like the line on a tennis ball. Its rotation is detected by an optical or magnetic sensor 29 contained in an ink reservoir 30. Such a nib 3 would be secured against rotation itself, and the sensor 29 and ball 4 would perform the function of the disc 11, light source 12 and light-operated switch 13 of Figure 2.

Figure 5 shows an interface 31 for use with the pen which has been previously described and illustrated. the interface 31 contains a microprocessor, appropriately programmed, and comprises a keyboard 32. The programming of the microprocessor will be apparent from the following description. At the top edge of the keyboard 32 there is provided a box 33 containing a D.C. electric motor. An end of the flexible drive shaft 27 is coupled to this motor in a similar manner to that in which the other end is coupled to the shaft 5 (see Figure 3). The interface is used to couple the pen to a computer.

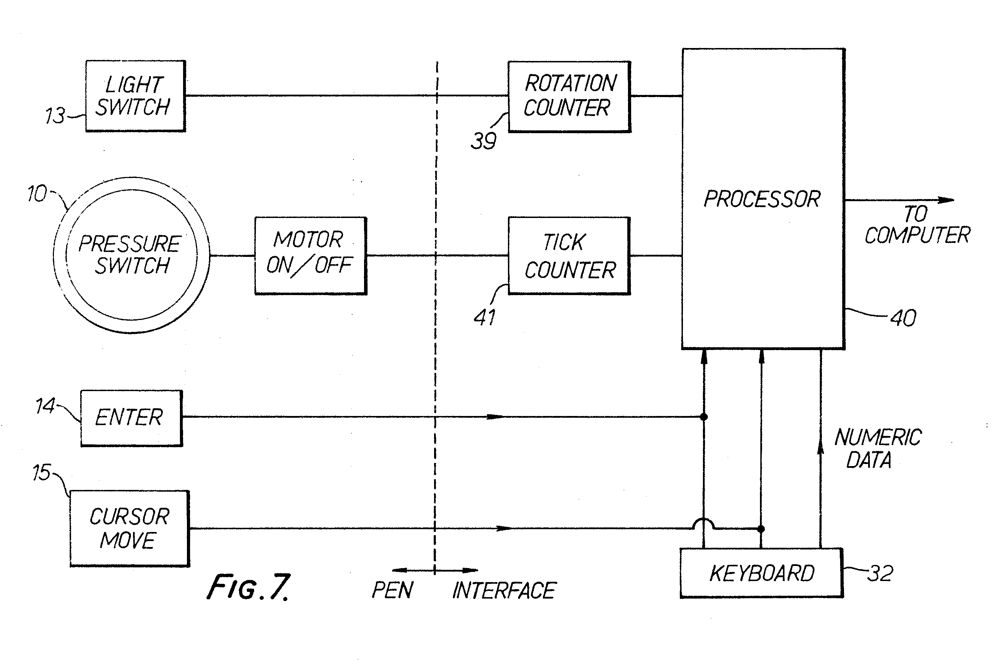

In order to illustrate and describe one particularly advantageous form of use of the invention, Figure 6 shows a drawing 34 of a type which may be analysed using an embodiment of the present invention. The drawing 34 may have a transparent overlay thereon to protect it. The pen comprising holder 1 is shown, together with the interface 31. The latter interfaces between the pen and a remote computer 35 having a visual display unit 36 and a keyboard 37. A monitor 38 can be coupled to the computer 35 and positioned near to the drawing 34 to allow an operator to see what is displayed on the visual display unit 36. The electrical and data links between the various pieces of apparatus are shown as cables, but they could instead employ infra-red or other radiation signals.

The computer 35 is running a spreadsheet program, such as for example 'VISICALC' (Registered Trade Mark), in order to enable a plumber to estimate costs relating to pipework illustrated in the drawing 34. A display, of the programme, which the operator sees on the visual display unit 36 or the monitor 38 is illustrated in Figure 8. The pen and interface 31 are to input numerical data and commands into the computer 35.

The interface 31 will receive from the pen pulses from the light operated switch 13 indicative of the length of line traversed by the ball 4, together with signals from the annular pressure switch 10 and commands from the finger operated switches 14 and 15 on the pen holder. The switch 15 on the pen holder can control movement of a cursor on the screen of the visual display unit 36 or the monitor 37, and the switch 14 controls entry of data into the computer 35. Cursor control and enter switches are provided also on the keyboard of the interface 31 as shown. The four cursor control switches have arrows on them.

The interface 31 will supply ASCII characters to the computer 35, by way preferably of an RS232 input of the latter.

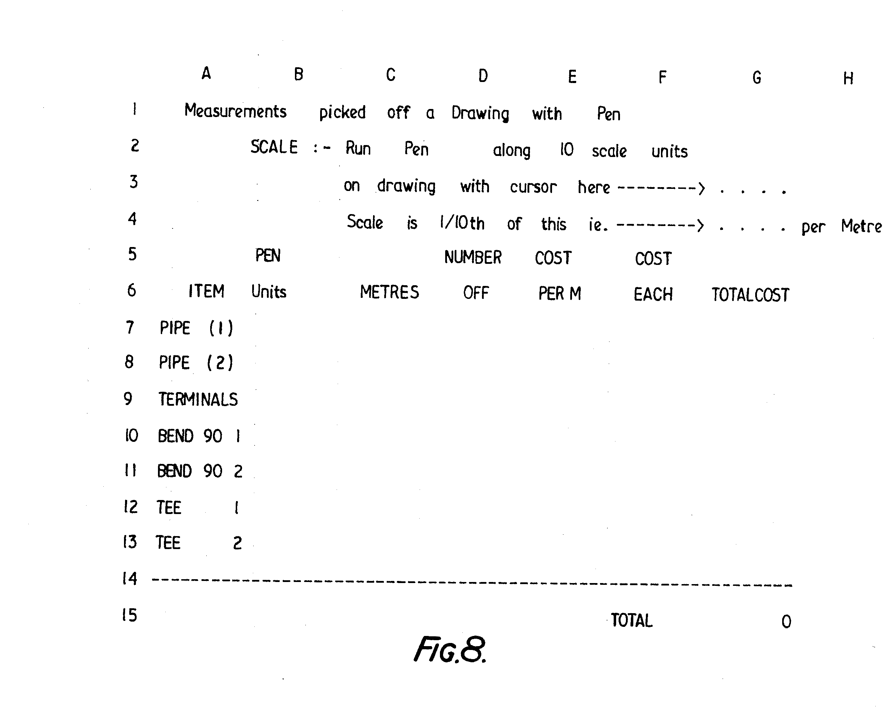

Figure 7 shows schematically the electrical connections between the pen, the interface 31 and the computer 35, when the whole system is coupled-up as shown in Figure 6.

The light-operated switch 13 sends pulses to a rotation counter 39 which sends the value of the pulse count to the microprocessor 40. This provides an indication of the amount of rotation of the shaft 5 and ball 4, and thus of the length of a line traversed by the ball 4.

The annular pressure switch 10 when operated by the ball 4 contacting an object, operates a motor ON/OFF circuit to put the shaft 5 into rotation to drive the ball 4 along a line to be measured until the ball 4 is lifted-off the object to stop the motor and thus the count made by the rotation counter 39. The annular switch also responds when a tick is made such as shown in Figure 6. A tick counter 41 counts such ticks and sends the total to the microprocessor and then onto the computer 35. The purpose of such ticks will be described hereinafter.

Finger-operated switch 14 on the pen is an ENTER switch and switch 15 a CURSOR MOVE switch having the same functions as the same keys on the keyboard of the interface. The CURSOR MOVE switch 15 on the pen can be a switch having a floating button and four contacts arranged at North, South, East and West positions. These contacts will be operated selectively depending on which direction the floating button is pushed, providing a type of joystick control for the CURSOR, directly from the pen.

The microprocessor is programmed as appropriate to supply data, appropriately coded, to the computer 35.

The apparatus will operate generally as follows with a spreadsheet display: When measuring the length of a line the ball 4 is applied to the beginning of a line. The annular pressure switch 10 is actuated to start the drive motor, which runs until the ball 4 is lifted from the drawing. During that period the pulses from the

light operated switch 13 are summed in the rotation counter 39. When the ENTER key is pressed on the holder 1 or on the keyboard 32 of the interface 31, the number of summed pulses, sent as an ASCII code to the computer 35, is fixed as an appropriate value in a spreadsheet cell selected by the cursor. The cursor can then be moved to the next spreadsheet cell which is to receive information, and the pulse counter reset.

An example of the use of the apparatus would be in the measurement of the length of pipe runs on a drawing, and the counting of bends, junctions, terminations and/or other standard plumbing items. The information is placed electronically in appropriate cells of a spreadsheet as shown in Figure 8, after being picked from the example drawing 34 shown in Figure 6. The procedure would be as follows:-

1. Introduce scale by placing the cursor in cell G3 of Figure 8, traverse the nib across the scale on drawing 34 so as to represent a scale movement of 10 metres, and a number will appear in that cell. Press the 'ENTER' button to fix the number, and the number in the cell below will be that number divided by 10 (since the formula 'divide value in cell G3 by 10' is installed there); this new number will be the scale constant to convert future traversed lengths to metres, as the multiplier of pulse count units placed in cells B7 and B8 to yield true metric lengths in cells C7 and C8.

2. To obtain the length in metres at cell C7 of pipe (1) firstly the cursor is directed to cell B7. The ball 4 is then put into contact with the drawing at point A. This automatically starts the ball drive motor, and the ball is allowed to traverse the line ABCD-E,D-F. When the ball is lifted from the drawing the drive motor stops and pulses are not counted.

When the point F is reached the ball is lifted, finally stops, and the total number of pulses in the rotation counter 39 is entered at B7. The length in metres shows at C7, the cost per metre is at E7, and the total cost shows at G7. It is to be understood that the ball can be lifted several times before the point F is reached, to input several discrete lengths. The count in counter 39 accumulates all this time, until the ENTER button is finally depressed upon reaching point F. A similar cumulative action can be provided for the tick counter 41.

3. A similar operation can be done between points F and L in respect of pipe (2), which could be of a different size or a different cost per metre, in order to complete line 8 of the spreadsheet.

4. In order to complete line 9, the number of terminals (shown as circles at A,E,M, and L) can be counted simply by ticking them on the drawing. The annular pressure switch 10 detects each tick, and the total number of ticks in the tick counter 41 sent to cell D9. The number could be entered and the total cost appear in the final column. This gives an example of how the tick counter 41 will operate.

5. A similar procedure as for 4 could be applied to lines 10 and 11 for two types of $90^{\circ}$ bends, and to lines 12 and 13 for two types of tee junctions.

The total cost appears at the bottom of the spreadsheet.

The accuracy of length measurements can be increased by making repeated measurements of the same length and placing the sum of those repeated measurements in a cell, then placing the total number of such measurements in a second cell. A third cell will be formulated to divide the former by the latter to yield the average measurement.

Whereas the above employs a typical spreadsheet program, purpose-written software might be employed where the computer is dedicated to use with the apparatus which is being described.

The nib 3 and ball 4 may employ various means of obtaining scale, and dealing with different surfaces that may need to be protected against marking. The travelling ball may be interchangeable with others of different radii to adjust scale, and/or others formed from different substances to avoid damage or contamination. The ball may be replaced by, or be interchangeable with, a disc, roller or other configuration suitable for the particular use for which the apparatus is required.

It is possible for the pen to be used separately from the interface and the computer, and for the sensed information to be stored. For example, where a pen such as shown in Figure 3 is being used away from the office to measure a building, the output of the pen could be recorded on one channel of a stereo tape cassette, synchronised with a vocal commentary recorded on the other track. On return to the office, the tape could be played back through the interface to the computer, as if picked directly from a drawing, as described.

The pen is extremely portable, and can be operated at any angle with an appropriate scaling factor.

With a small ball it can be used on fine detail drawings with small angles therein, and with a large ball can provide a self-propelled device for use on large spans such as are found in or on buildings.

The apparatus is particularly useful when employed in conjunction with a computer running a spreadsheet program in which drawing or physical lengths are to be measured and entered, and in which items are to be counted. An example has been given of a very simple spreadsheet and a very simple pipework diagram. However, one can imagine that in a complicated example in which information is to be taken-off a highly complicated drawing including tens or even hundreds of different lengths to be measured and items to be counted, the presently described and illustrated method and apparatus would be far superior to using, say, a ruler in conjunction with the computer keyboard.

There is also a use in computer graphics, whereby information sent to the computer can reconstruct a drawing in a graphics program, as in a Computer Aided Design Program. Also, dimensions picked-off a three dimensional object could be used to construct a set of drawings of the object.

In the specifically described embodiment the annular pressure switch 10 controls the switching on and off of the drive motor. Alternatively, the motor could be controlled by another finger-operated switch at the operator's convenience. Also, in self-propelled embodiments where no motor is provided, the annular pressure switch 10 can still be included, for the purpose of tick counting only.

It will be appreciated that different sized balls between the two sizes illustrated can be used, depending on the application. As a general rule however, it has been found that a minimum ball diameter of 4mm may be required if the ball is to be self-propelled. A drive motor may be required for balls of any smaller diameter. The drive motor could have variable speed.

As an alternative to the scaling method described with reference to Figures 6 and 8, it is possible for a scaling factor to be keyed-into the microprocessor 40 of Figure 7 as desired. In this manner the microprocessor 40 could output to the computer either actual length traversed, or scaled-up length traversed, both in dependence upon the number of ball revolutions executed.

It will be appreciated that, in use, for best accuracy the pen ought to be held at a constant angle to the surface carrying the line being measured, both during scaling and subsequent measuring. The pen being relatively fat has been found to assist in this. However, it is to be emphasised that the pen provides a cheap and quick method of estimation with an accuracy commensurate with the requirements of such estimation. Great accuracy is not an essential requirement of the pen.

In order to assist in keeping the pen at a constant angle in use, it could incorporate some form of level, possibly a spirit level.

It is to be noted that two different types of information are to be entered into the computer: rotation count from counter 39, and tick count from counter 41, depending on whether the operator has been measuring line length or counting items. When either ENTER button alone is depressed, the rotation count alone is entered to measure line length. Also, the processor 40 is so arranged that when it detects simultaneous actuation of the pressure switch 10 and either ENTER button, the tick count alone is entered. In each case, both counters 39 and 41 are cleared in response to depression of the ENTER button. In this way, the operator can control and differentiate between the two types of information which it is possible to pick-up and then enter, i.e. rotation count and tick count. As an alternative to this arrangement, it is possible to provide separate ENTER buttons for the respective separate counters 39 and 41, which can be depressed selectively to enter the particular type of information required and to clear the associated counter.

0143581

Claims:

1.    A linear measurement apparatus in the form of a computer peripheral comprising a holder which can be freely manipulated by a human hand as desired, a rotary element which is supported by said holder and which is to rotate on and along a line to be measured, rotation detection means to detect rotation of said rotary element, and electrical connection means coupled to said rotation detection means for delivering therefrom electrical signals indicative of an amount of rotation of said rotary element and thus of the length of said line to be measured.

2.    A linear measurement apparatus as claimed in claim 1, wherein said electrical connection means includes an interface for a computer.

3.    A linear measurement apparatus as claimed in claim 1 or 2, wherein said electrical connection means are coupled to a computer.

4.    A linear measurement apparatus as claimed in claim 3, wherein said computer is programmed to run a spreadsheet in which line lengths can be inserted via said electrical connection means in dependence upon said rotation detection means.

5.    A linear measurement apparatus as claimed in claim 3 or 4, wherein said computer is programmed to run a spreadsheet in which a count of items can be inserted in dependence upon a pressure sensor in said holder arranged to deliver a signal indicative of pressure change on said rotary element.

0143581

-16-

6. A linear measurement apparatus as claimed in any preceding claim, wherein the holder is in the form of a pen.

7. A linear measurement apparatus as claimed in any preceding claim, and comprising a drive motor for driving said rotary element in rotation on and along said line.

8. A linear measurement apparatus as claimed in any preceding claim, and comprising a pressure sensor arranged to deliver a signal indicative of pressure change on said rotary element.

9. A linear measurement apparatus as claimed in claim 8, wherein said rotary element is mounted on a rotary shaft and said pressure sensor comprises a floating rotary bearing for said shaft.

10. A linear measurement apparatus as claimed in any preceding claim, in combination with recording apparatus which can record said electrical signals remote from a computer, and play them back to a computer subsequently.

Fig.1.

Fig.2.

FIG. 3.

FIG. 4.

FIG. 5.

SCALE - METRES

FIG. 6.

FIG. 7.

PEN  ←→  INTERFACE

|     | A | B | C | D | E | F | G | H |
|-----|---|---|---|---|---|---|---|---|
| 1 | Measurements | picked | off | a Drawing | with | Pen | | |
| 2 | | SCALE :- Run | Pen | | along | 10 scale | units | |
| 3 | | | on | drawing | with | cursor | here --------> . . . . | |
| 4 | | | Scale | is | 1/10th of | this ie. --------> | . . . . per Metre | |
| 5 | | PEN | | NUMBER | COST | COST | | |
| 6 | ITEM | Units | METRES | OFF | PER M | EACH | TOTALCOST | |
| 7 | PIPE (1) | | | | | | | |
| 8 | PIPE (2) | | | | | | | |
| 9 | TERMINALS | | | | | | | |
| 10 | BEND 90 1 | | | | | | | |
| 11 | BEND 90 2 | | | | | | | |
| 12 | TEE 1 | | | | | | | |
| 13 | TEE 2 | | | | | | | |
| 14 | -------------------------------------------------------------------- | | | | | | | |
| 15 | | | | | TOTAL | 0 | | |

*FIG.8.*